# EUROPÄISCHE PATENTSCHRIFT

(11) **EP 2 526 282 B1**
(45) Veröffentlichungstag und Bekanntmachung des Hinweises auf die Patenterteilung: **03.09.2014**
(21) Anmeldenummer: 11700825.0
(22) Anmeldetag: 11.01.2011
(51) Int. Cl.: F02M 25/07, F16K 15/16

(54) **RÜCKSCHLAGVENTIL FÜR EINE VERBRENNUNGSKRAFTMASCHINE UND VERFAHREN ZUR HERSTELLUNG EINES DERARTIGEN RÜCKSCHLAGVENTILS**
NON-RETURN VALVE FOR AN INTERNAL COMBUSTION ENGINE AND METHOD FOR PRODUCING SUCH A NON-RETURN VALVE
CLAPET ANTIRETOUR POUR UN MOTEUR À COMBUSTION ET PROCÉDÉ POUR LA FABRICATION D'UN TEL CLAPET ANTI-RETOUR

(30) Priorität: 19.01.2010 DE 102010005117
(43) Veröffentlichungstag der Anmeldung: 28.11.2012
(73) Patentinhaber: Pierburg GmbH, 41460 Neuss (DE)
(72) Erfinder: HÜSGES, Hans-Jürgen, Willich 47877 (DE); KÜHNEL, Hans-Ulrich, Mönchengladbach 41239 (DE)
(74) Vertreter: Patentanwälte ter Smitten Eberlein Rütten Partnerschaftsgesellschaft
(86) Internationale Anmeldenummer: PCT/EP2011/050250
(87) Internationale Veröffentlichungsnummer: WO 2011/089038

(56) Entgegenhaltungen:
- DE-A1- 19 953 198
- US-A- 4 643 139
- US-A1- 2001 032 676

## Beschreibung

Die Erfindung betrifft ein Rückschlagventil für eine Verbrennungskraftmaschine mit einem Gehäuse, welches zumindest vier über den Umfang verteilte Durchströmungsquerschnitte aufweist, zumindest vier Ventilsitzflächen, die jeweils einen Durchströmungsquerschnitt umgeben, zumindest vier Ventilschließgliedern, über welche die Durchströmungsquerschnitte druckabhängig verschlossen oder freigegeben sind und welche jeweils als Blattfederelement ausgeführt sind und zumindest vier Ventilanschlagelementen, über welche eine Öffnungsbewegung der Ventilschließglieder begrenzt ist.

Rückschlagventile werden insbesondere in Abgasrückführleitungen eingesetzt, um zu verhindern, dass Luft aus der Ladeluftleitung in die Abgasrückführleitung strömt, wenn der Druck in der Ladeluftleitung aufgrund der Druckschwankungen im Abgasbereich höher ist als der Druck in der Abgasrückführleitung. Diese Ventile sollen möglichst schnell öffnen und schließen, so dass sie zumeist als Flatterventile mit Blattfederelementen als Ventilschließglieder ausgeführt werden. Da der Öffnungsquerschnitt solcher Flatterventile begrenzt ist und Öffnungsbegrenzer in Form von Anschlagelementen vorzusehen sind, um ein Brechen der Blattfedern zu verhindern, werden diese Ventile zumeist mehrflutig ausgebildet.

So ist aus der DE 199 53 198 A1 ein derartiges mehrflutiges Rückschlagventil bekannt, bei dem vier Blattfederelemente jeweils einzeln mit jeweils einem Anschlagelement durch Schrauben am Grundgehäuse, welches zweiteilig ausgeführt ist, befestigt werden. Die Blattfederelemente sind dabei entweder paarweise einander gegenüberliegend angeordnet oder an den Seitenflächen eines Pyramidenstumpfes. Die Ausführung mit dem Pyramidenstumpf erhöht zwar den möglichen freigebbaren Durchströmungsquerschnitt bei gleicher Baugröße jedoch bleibt der Montageaufwand eines solchen Ventils relativ hoch.

Auch aus der DE 10 2009 007 609 A1 ist ein mehrflutiges Rückschlagventil bekannt, wobei die Anschlagelemente und die Ventilschließglieder einstückig ausgebildet sind und in entsprechende Aufnahmen des Gehäuses eingesteckt werden. Die Durchströmungsquerschnitte sind jeweils paarweise gegenüberliegend angeordnet. Der Montageaufwand wird bei dieser Ausfürung zwar reduziert jedoch ist der freigebbare Durchströmungsquerschnitt stark eingeschränkt, da eine solche Ausführung nur mit zwei einander gegenüberliegenden Durchströmungsquerschnitten durchführbar ist.

In der DE 10 2005 059 120 B3 wird eine dreiteilige zusammensetzbare Ruckschlagventileinrichtung vorgeschlagen, bei der eines der Teile das Gehäuse bildet, ein zweites Teil alle Anschlagelemente bildet und ein drittes Teil alle Ventilschließglieder bildet. Hier ist der Montageaufwand wieder erhöht und gleichzeitig die zur Verfügung stehende Querschnittsfläche weiterhin durch das erforderliche Gegenüberliegen der Durchströmungsquerschnitte eingeschränkt.

Daher liegt der Erfindung die Aufgabe zugrunde, ein Rückschlagventil zu schaffen, welches bei möglichst geringem Montage- und Herstellungsaufwand und geringer Bauteileanzahl einen möglichst großen freigebbaren Durchströmungsquerschnitt bei geringer Baugröße aufweist. Zusätzlich soll ein Verfahren zur Herstellung eines solchen Ventils mit möglichst geringem Herstellungs- und Montageaufwand gefunden werden.

Diese Aufgabe wird durch ein Rückschlagventil mit den Merkmalen des kennzeichnenden Teils des Anspruchs 1 sowie ein Verfahren mit den Merkmalen des kennzeichnenden Teils des Anspruchs 12 gelöst.

Dadurch, dass die Blattfederelemente miteinander verbunden sind und über ein gemeinsames Befestigungselement am Gehäuse befestigt sind und gleichzeitig die Durchströmungsquerschnitte und die Blattfederelemente über den Umfang verteilt angeordnet sind, wird der Montageaufwand zur Befestigung der Blattfederelemente minimiert und gleichzeitig ein relativ großer Durchströmungsquerschnitt zur Verfügung gestellt.

Der Herstellungsaufwand wird durch ein Verfahren minimiert, bei dem das Gehäuse in einer Werkzeugform gegossen wird, wobei die Anschlagelemente und die Ventilsitzflächen in einer gemeinsamen Formhälfte des Werkzeugs ausgebildet werden, die Blattfederelemente zusammenhängend aus einer Platine ausgestanzt und anschließend korrespondierend zu den Ventilsitzflächen gebogen werden und in einem abschließenden Schritt die Platine über ein Befestigungselement an einer oberen Begrenzungsfläche des Gehäuses befestigt wird. Somit ist kein zusätzliches Bauteil zur Ausbildung der Anschlagelemente notwendig. Auch werden die Toleranzen zwischen den einzelnen Anschlagelementen untereinander und zu den Ventilsitzflächen durch die Ausbildung in einer Formhälfte minimiert. Das Gießen des Gehäuses ist bevorzugt ein Kunststoffspritzgießen.

In einer erfindungsgemäßen Weiterbildung des Rückschlagventils sind die Ventilanschlagelemente einstückig mit dem Gehäuse ausgebildet, wodurch ein zusätzlicher Schritt beim Zusammenbau entfällt und somit der Montageaufwand verringert wird. Des Weiteren ist eine genaue Positionierung durch diese Ausbildung sichergestellt.

Vorzugsweise bildet eine Platine die Blattfederelemente. Sie sind somit einstückig hergestellt, wodurch der einzelne Befestigungspunkt ausreicht.

In einer weiterführenden Ausführung weist die Oberfläche der Platine eine elastische Beschichtung auf. Mit dieser Beschichtung liegt das jeweilige Blattfederelement auf der Ventilsitzfläche auf. Die Dichtigkeit wird durch die Elastizität der Schicht erhöht.

In einer besonders bevorzugten Ausführung der Erfindung weist das Gehäuse eine Grundfläche auf, in der ein Einströmquerschnitt ausgebildet ist und von der aus sich Seitenwände, die die Durchströmungsquerschnitte umgeben, in Richtung einer im Wesentlichen parallel zur Grundfläche angeordneten oberen Begrenzungswand erstrecken. Eine derartige Form ermöglicht die Befestigung der Blattfederelemente an einem Befestigungspunkt am Gehäuse bei gleichzeitig möglichst großem freigebbaren Querschnitt.

Vorzugsweise ist das Befestigungselement an der oberen Begrenzungswand befestigt, wodurch die Montage erleichtert wird und eine Befestigung an einem Symmetriepunkt der Platine erfolgen kann, wodurch gleiche Öffnungs- und Schließkräfte sichergestellt werden.

Zur Zentrierung der Platine ist an der oberen Begrenzungswand zumindest ein Zentrierstift ausgebildet, welcher mit zumindest einer Aussparung an der Platine korrespondiert. Selbstverständlich ist es auch möglich, zwei oder mehr Zentrierstifte, die einstückig mit dem Gehäuse ausgebildet sind, zu verwenden. Hierdurch wird das Fügen der Platine am Gehäuse vor der eigentlichen Befestigung ermöglicht. Ein weiteres Ausrichten ist dann nicht erforderlich.

Eine besonders einfache und sichere, sowie wieder lösbare Art der Befestigung ergibt sich, wenn das Befestigungselement als Schraube oder Dübel ausgeführt ist.

In einer besonders bevorzugten Ausführung erstrecken sich die Anschlagelemente von der Grundfläche des Gehäuses aus. Auf diese Weise können die Anschlagelemente als gerade Wände ausgebildet werden, was die Festigkeit erhöht und die Herstellung vereinfacht.

Vorteilhafterweise ist das Gehäuse im Wesentlichen als Pyramidenstumpf mit an den vier Seitenwänden des Pyramidenstumpfes ausgebildeten Durchströmungsquerschnitten ausgeformt. Diese Form ist einfach herstellbar und ermöglicht relativ große Durchströmungsquerschnitte bei ausreichender Befestigungsfläche für die Platine.

In einer alternativen Ausführung weist das Gehäuse eine kreisförmige Grundfläche auf, von der aus sich zur parallelen Begrenzungswand Seitenwände erstrecken, die im Querschnitt zueinander in Form eines Vielecks mit gleichen Seitenlängen angeordnet sind. Die Seitenwände können dabei entweder senkrecht oder leicht schräg zur Grundfläche verlaufen. Auch bei dieser Ausführung stehen relativ große Durchströmungsquerschnitte zur Verfügung. Der Querschnitt der Wände zueinander kann dabei beispielsweise die Form eines Achtecks beschreiben. Die genannten Vorteile bleiben auch hier erhalten.

Es wird somit ein Rückschlagventil geschaffen und ein Verfahren zur Herstellung eines solchen vorgestellt, bei denen die Montage im Vergleich zu bekannten Ausführungen vereinfacht wird und gleichzeitig ein großer Durchströmungsquerschnitt freigegeben werden kann. Dieses Ventil schließt und öffnet sehr schnell, wobei eine Überlastung der Blattfedern durch die Anschlagelemente zuverlässig vermieden wird. Gleichzeitig ist dieses Ventil mit geringen Toleranzen herstellbar, so dass eine gleichmäßige Belastung der einzelnen Blattfedern erreicht wird.

Zwei Ausführungsbeispiele der Erfindung sind in den Zeichnungen dargestellt und werden nachfolgend beschrieben.
Figur 1 zeigt eine erste Ausführungsform eines erfindungsgemäßen Rückschlagventils in perspektivischer Ansicht.
Figur 2 zeigt eine perspektivische Ansicht des Rückschlagventils aus Figur 1 von der entgegengesetzten Seite.
Figur 3 zeigt eine zweite Ausführungsform eines erfindungsgemäßen Rückschlagventils in perspektivischer Ansicht.

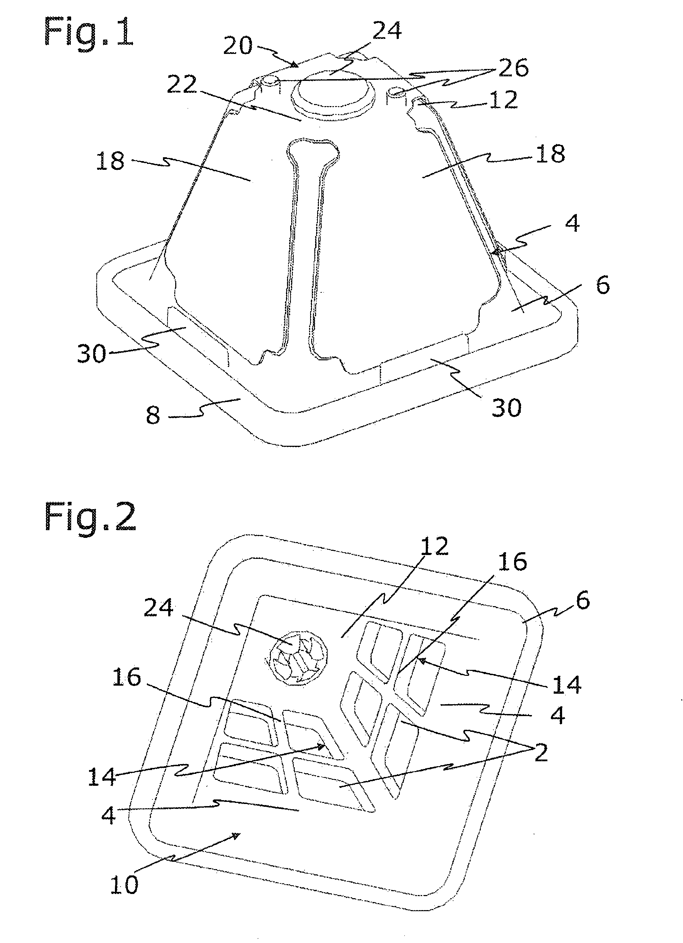

Das erfindungsgemäße Rückschlagventil gemäß der Figuren 1 und 2 ist als vierflutiges Rückschlagventil mit vier über den Umfang verteilten Durchströmungsquerschnitten 2 ausgebildet, welche an Seitenwänden 4 eines Gehäuses 6 angeordnet sind, welches die Form eines Pyramidenstumpfes aufweist, der aus einer quadratischen Grundfläche 8 mit einem Einströmquerschnitt 10, einer parallel zur Grundfläche 8 angeordneten Begrenzungswand 12 sowie den die Grundfläche 8 mit der Begrenzungswand verbindenden Seitenwänden 4 besteht.

Die Durchströmungsquerschnitte 2 des Gehäuses 6 sind von Ventilsitzflächen 14 umgeben, wobei im vorliegenden Ausführungsbeispiel, wie in Figur 2 zu erkennen ist, jeder Durchströmungsquerschnitt 2 in vier einzelne Durchströmungsquerschnitte aufgeteilt ist, so dass eine Sprossenstruktur 16 in den Durchströmungsquerschnitten 2 entsteht, die als zusätzliche Auflagefläche für Ventilschließglieder dient, welche im geschlossenen Zustand auf den Ventilsitzflächen 14 aufliegen und somit die Durchströmungsquerschnitte 2 beherrschen.

Die Ventilschließglieder sind als Blattfederelemente 18 ausgeführt, welche gemeinsam aus einer Platine 20 ausgestanzt und anschließend entsprechend gebogen werden. Die einzelnen Blattfederelemente 18 hängen auch im eingebauten Zustand über ein Verbindungsstück 22 der Platine 20 miteinander verbunden. Dieses Verbindungsstück 22 ist auf der Begrenzungswand 12 angeordnet und dort über einen als Befestigungselement dienenden Dübel 24 mit dem Gehäuse 6 fest verbunden. Hierzu ist im Verbindungsstück 22 der Platine 20 ein zentrales Loch angeordnet, durch weiches der Dübel 24 bei der Befestigung geführt wird. Ein entsprechendes Loch befindet sich auch an der Begrenzungswand 12 des Gehäuses 6.

Zusätzlich sind an der Begrenzungswand 12 zwei Zentrierstifte 26 ausgebildet, die sich von der Begrenzungswand 12 in Richtung des Verbindungsstückes 22 der Platine 20 erstrecken. Diese Zentrierstifte 26 korrespondieren mit zwei entsprechend ausgeformten Aussparungen im Verbindungsstück 22 der Platine 20, welche ebenfalls mit ausgestanzt werden. Über diese Zentrierstifte 26 werden die Platine 20 und somit die Blattfederelemente 18 beim Zusammenbau vorfixiert. Zusätzlich wird hierdurch ein Verdrehen der Platine 20 zum Gehäuse 6 verhindert.

Am Gehäuse 6 sind des Weiteren vier Ventilanschlagelemente 30 ausgebildet, die sich von der Grundfläche 8 in Richtung zur oberen Begrenzungswand 12 erstrecken. Ihre Höhe wird derart gewählt, dass die Blattfederelemente 18 beim Abheben von den Ventilsitzflächen 14 mit ihren vom Verbindungsstück 22 entfernten Enden gegen die Anschlagelemente 30 anschlagen. Somit verhindern die Anschlagelemente 30 ein weitergehendes Öffnen der Blattfederelemente 18.

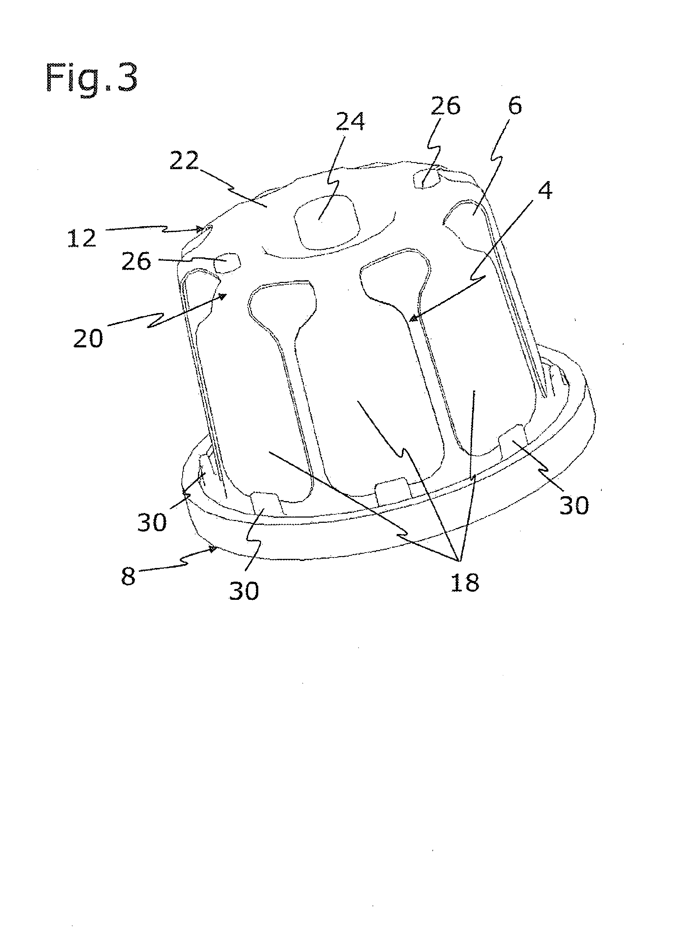

In Figur 3 ist eine alternative Ausführung des erfindungsgemäßen Rückschlagventils dargestellt, wobei gleiche Funktionsbauteile mit gleichen Bezugszeichen versehen sind. Diese zweite Ausführung unterscheidet sich von der ersten durch die Form des Gehäuses 6 und der Platine 20. Die Grundfläche 8 ist kreisförmig ausgeführt. Von der Grundfläche erstrecken sich etwa senkrecht zur Grundfläche 8 acht Seitenwände 4, welche jeweils eine gleiche Breite aufweisen und im gleichen Winkel zueinander angeordnet sind, so dass im Querschnitt des Gehäuses ein gleichseitiges Achteck entsteht. In jeder der Seitenwände 4 ist wiederum ein Durchströmungsquerschnitt 2 ausgebildet, der von einem Blattfederelement 18 beherrscht wird. Die Blattfederelemente 18 sind wiederum einstückig hergestellt und hängen über das Verbindungsstück 22, über welches die gesamte Platine 20 an der oberen Begrenzungswand 12 mittels eines Befestigungselementes 24 befestigt ist, aneinander.

Die Herstellung beider dargestellter Rückschlagventile erfolgt derart, dass zunächst beispielsweise durch Spritzgießen ein entsprechendes Gehäuse 6 hergestellt wird. Dabei ist darauf zu achten, dass das zum Spritzgießen verwendete Werkzeug eine Formhälfte aufweist, die die außenliegenden Flächen abbildet und eine Formhälfte aufweist, die die inneren Flächen abbildet. Hierdurch wird sichergestellt, dass die Ventilsitzflächen 14, die Ventilanschlagelemente 30, das Loch zur Befestigung und die Zentrierstifte 26 bezüglich ihrer Position extrem kleine Toleranzen zueinander aufweisen.

Im nächsten Schritt werden aus einer Platine 20 die Blattfederelemente 18 mit dem Verbindungsstück 22 ausgestanzt. Die Blattfederelemente 18 werden anschließend entsprechend zum Verbindungsstück 22 gebogen, so dass der Winkel zwischen der Fläche des Verbindungsstückes 22 und den ) Blattfederelementen 18 dem Winkel zwischen der oberen Begrenzungswand 12 des Gehäuses 6 und den Seitenwänden 4 entspricht. Anschließend wird die Platine 20 auf das Gehäuse aufgesetzt, wobei die Aussparungen um die Zentrierstifte 26 greifen und die Platine 20 an der oberen Begrenzungswand 12 durch den Dübel 24 befestigt ist.

Das Rückschlagventil wird so in eine Abgasleitung eingebaut, dass Abgas über den Einströmquerschnitt 10 in der Grundfläche 8 in das Ventil gelangt. Ist der Druck auf dieser Seite höher als der Druck im Außenbereich, also auf der Ladeluftseite des Ventils werden die Blattfederelemente 18 von ihren Ventilsitzflächen 14 abgehoben, so dass ein Abgasstrom durch die Durchströmungsquerschnitte 2 in den Außenbereich des Ventiles strömen kann. Sobald der Druck jedoch im Außenbereich höher ist, werden die Blattfederelemente 18 auf ihre Ventilsitzflächen 14 gedrückt und ein Gasstrom vollständig unterbrochen.

Um eine gute Dichtwirkung des Rückschlagventils zwischen der Abgasrückführleitung und dem Gehäuse zu erreichen und des Weiteren das Gehäuse dämpfend in der Abgasrückführleitung zu lagern, kann ein umlaufendes Dichtorgan an der Grundfläche vorgesehen werden. Darüberhinaus kann das Gehäuse 6 beispielsweise aus einem Duroplast hergestellt werden, wobei der Bereich der Ventilsitzflächen mit einem thermisch belastbaren Elastomer beschichtet ist, um eine optimale Abdichtung zu gewährleisten. Alternativ kann auch die Platine gummiert ausgeführt sein.

Die beschriebenen Ausführungen erfindungsgemäßer Rückschlagventile nutzen den zur Verfügung stehenden Raum zur Freigabe eines möglichst großen Querschnitts zur Durchströmung besonders gut. Gleichzeitig ist der Herstell- und Montageaufwand im Vergleich zu bekannten Ausführungen minimiert. Ein zuverlässiges Schließen wird durch die geringen Toleranzen sichergestellt.

Es sollte deutlich sein, dass innerhalb des Schutzbereiches des Hauptanspruchs verschiedene konstruktive Änderungen denkbar sind. So kann das Gehäuse aus verschiedenen Materialien hergestellt werden. Auch sind verschiedene konstruktive Ausformungen des Gehäuses und somit der ausgestanzten Platine je nach Anwendung denkbar. Nichtzuletzt ist eine Befestigung der Platine auch über Schrauben oder Nieten durchführbar.

## Patentansprüche

1. Rückschlagventil für eine Verbrennungskraftmaschine mit
einem Gehäuse, welches zumindest vier über den Umfang verteilte Durchströmungsquerschnitte aufweist,
zumindest vier Ventilsitzflächen, die jeweils einen Durchströmungsquerschnitt umgeben,
zumindest vier Ventilschließgliedern, über welche die Durchströmungsquerschnitte druckabhängig verschlossen oder freigegeben sind und welche jeweils als Blattfederelement ausgeführt sind und
zumindest vier Ventilanschlagelementen, über welche eine Öffnungsbewegung der Ventilschließglieder begrenzt ist,
**dadurch gekennzeichnet dass**
die Blattfederelemente (18) miteinander verbunden sind, über den Umfang des Gehäuses (6) verteilt angeordnet sind und über ein gemeinsames Befestigungselement (24) am Gehäuse (6) befestigt sind.

2. Rückschlagventil für eine Verbrennungskraftmaschine nach Anspruch 1, **dadurch gekennzeichnet, dass**
die Ventilanschlagelemente (30) einstückig mit dem Gehäuse (6) ausgebildet sind.

3. Rückschlagventil für eine Verbrennungskraftmaschine nach einem der Ansprüche 1 oder 2,
**dadurch gekennzeichnet, dass**
eine Platine (20) die Blattfederelemente (18) bildet.

4. Rückschlagventil für eine Verbrennungskraftmaschine nach Anspruch 3,
**dadurch gekennzeichnet, dass**
die Oberfläche der Platine (20) eine elastische Beschichtung aufweist.

5. Rückschlagventil für eine Verbrennungskraftmaschine nach einem der vorhergehenden Ansprüche,
**dadurch gekennzeichnet, dass**
das Gehäuse (6) eine Grundfläche (8) aufweist, in der ein Einströmquerschnitt (10) ausgebildet ist, und von der aus sich Seitenwände (4), die die Durchströmungsquerschnitte (2) umgeben, in Richtung einer im Wesentlichen parallel zur Grundfläche (8) angeordneten oberen Begrenzungswand (12) erstrecken.

6. Rückschlagventil für eine Verbrennungskraftmaschine nach Anspruch 5,
**dadurch gekennzeichnet, dass**
das Befestigungselement (24) an der oberen Begrenzungswand (12) befestigt ist.

7. Rückschlagventil für eine Verbrennungskraftmaschine nach einem der Ansprüche 5 oder 6,
**dadurch gekennzeichnet, dass**
an der oberen Begrenzungswand (12) zumindest ein Zentrierstift (26) ausgebildet ist, welcher mit zumindest einer Aussparung an der Platine (20) korrespondiert.

8. Rückschlagventil für eine Verbrennungskraftmaschine nach einem der Ansprüche 6 oder 7,
**dadurch gekennzeichnet, dass**
das Befestigungselement (24) als Schraube oder Dübel ausgeführt ist.

9. Rückschlagventil für eine Verbrennungskraftmaschine nach einem der Ansprüche 5 bis 8,
**dadurch gekennzeichnet, dass**
sich die Anschlagelemente (30) von der Grundfläche (8) des Gehäuses (6) aus erstrecken.

10. Rückschlagventil für eine Verbrennungskraftmaschine nach einem der Ansprüche 5 bis 9,
**dadurch gekennzeichnet, dass**
das Gehäuse (6) im Wesentlichen als Pyramidenstumpf mit an den vier Seitenwänden (4) des Pyramidenstumpfes ausgebildeten Durchströmungsquerschnitten (2) ausgeformt ist.

11. Rückschlagventil für eine Verbrennungskraftmaschine nach einem der Ansprüche 5 bis 9,
dadurch gekenntzeichnet, dass
das Gehäuse (6) eine kreisförmige Grundfläche (8) aufweist, von der aus sich zur parallel zur - Grundfläche (8) angeordneten Begrenzungswand (12) Seitenwände (4) erstrecken, die im Querschnitt zueinander in Form eines Vielecks mit gleichen Seitenlängen angeordnet sind.

12. Verfahren zur Herstellung eines Rückschlagventils für Verbrennungskraftmaschinen nach einem der vorhergehenden Ansprüche,
**dadurch gekennzeichnet, dass**
das Gehäuse (6) in einer Werkzeugform gegossen wird, wobei die Anschlagelemente (30) und die Ventilsitzflächen (14) in einer gemeinsamen Formhälfte des Werkzeugs ausgebildet werden,
die Blattfederelemente (18) zusammenhängend aus einer Platine (20) ausgestanzt und anschließend korrespondierend zu den Ventilsitzflächen (14) gebogen werden
und in einem abschließenden Schritt die Platine (20) über ein Befestigungselement (24) an einer oberen Begrenzungswand (12) des Gehäuses (6) befestigt wird.

## Claims

1. Non-return valve for an internal combustion engine having
a housing having at least through-flow cross sections distributed over the circumference,
at least four valve seat surfaces, each surrounding a through-flow cross section,
at least four valve closure members via which the through-flow cross sections are closed or open, depending on the pressure, and which are each designed as a leaf spring element, and
at least four valve stop elements by which an opening movement of the valve closure members is limited,
**characterized in that**
the leaf spring elements (18) are interconnected, are distributed over the circumference of the housing (6) and are fastened to the housing (6) by a common fastening element (24).

2. The non-return valve for an internal combustion engine of claim 1, **characterized in that** the valve stop elements (30) are formed integrally with the housing (6).

3. The non-return valve for an internal combustion engine of one of claims 1 or 2, **characterized in that** a board (20) forms the leaf spring elements (18).

4. The non-return valve for an internal combustion engine of claim 3, **characterized in that** the surface of the board (20) has an elastic coating.

5. The non-return valve for an internal combustion engine of one of the preceding claims, **characterized in that** the housing (6) has a base surface (8) in which an inflow cross section (10) is formed, and from which side walls (4) surrounding the through-flow cross sections (2) extend towards an upper limiting wall (12) arranged substantially in parallel with the base surface (8).

6. The non-return valve for an internal combustion engine of claim 5, **characterized in that** the fastening element (24) is fastened at the upper limiting wall (12).

7. The non-return valve for an internal combustion engine of one of claims 5 or 6, **characterized in that** at least one centering pin (26) is formed on the upper limiting wall (12), said pin corresponding with at least one recess in the board (20).

8. The non-return valve for an internal combustion engine of one of claims 6 or 7, **characterized in that** the fastening element (24) is designed as a screw or a dowel.

9. The non-return valve for an internal combustion engine of one of claims 5 to 8, **characterized in that** the stop elements (30) extend from the base surface (8) of the housing (6).

10. The non-return valve for an internal combustion engine of one of claims 5 to 9, **characterized in that** the housing (6) is substantially formed as a truncated pyramid with through-flow cross sections (2) formed in the four side walls (4) of the truncated pyramid.

11. The non-return valve for an internal combustion engine of one of claims 5 to 9, **characterized in that** the housing (6) has a circular base surface (8) from which the side walls (4) extend to the limiting wall (12) arranged in parallel with the base surface (8), which side walls, seen in cross section, are arranged with respect to each other in the form of a polygon with equal side lengths.

12. A method for manufacturing a non-return valve for an internal combustion engine of one of the preceding claims, **characterized in that**
the housing (6) is cast in a tool mold, the stop elements (30) and the valve seat surfaces (14) being formed in a common mold half of the tool,
the leaf spring elements (18) are punched from a board (20) in a connected manner and are subsequently bent corresponding to the valve seat surfaces (14),
and in a final step, the board (20) is fastened to an upper limiting wall (12) of the housing (6) by means of a fastening element (24).

## Revendications

1. Clapet anti-retour pour moteur à combustion interne, comprenant:
un boitier avec au moins quatre sections transversales d'écoulement reparties sur la périphérie,
au moins quatre surfaces de siège de clapet, chacune entourant une section transversale d'écoulement,
au moins quatre éléments de fermeture de clapet par lesquels les sections transversales d'écoulement sont fermées ou dégagées en fonction de pression, et qui sont respectivement réalisés comme élément de ressort à lame, et
au moins quatre éléments de butée de clapet par lesquels le mouvement d'ouverture des éléments de fermeture de clapet est limité,
**caractérisé en ce que**
les éléments de ressort à lame (18) sont connectés entre eux, sont repartis sur la périphérie du boitier (6) et sont fixés au boitier (6) par un élément de fixation (24) commun.

2. Clapet anti-retour pour moteur à combustion interne selon la revendication 1, **caractérisé en ce que** les éléments de butée de clapet (30) sont formés d'un seul tenant avec le boitier (6).

3. Clapet anti-retour pour moteur à combustion interne selon l'une des revendications 1 ou 2, **caractérisé en ce qu'**une plaquette (20) forme les éléments de ressort à lame (18).

4. Clapet anti-retour pour moteur à combustion interne selon la revendication 1, **caractérisé en ce que** la surface de la plaquette (20) comprend un revêtement élastique.

5. Clapet anti-retour pour moteur à combustion interne selon l'une quelconque des revendications précédentes, **caractérisé en ce que** le boitier (6) a une surface de base (8) dans laquelle est formée une section transversale d'admission (10), et à partir de laquelle des parois latérales (4), entourant les sections transversales d'écoulement (2), s'étendent vers une paroi de limite (12) supérieure disposée sensiblement en parallèle avec la surface de base (8).

6. Clapet anti-retour pour moteur à combustion interne selon la revendication 5, **caractérisé en ce que** ledit élément de fixation (24) est fixé sur la paroi de limite (12) supérieure.

7. Clapet anti-retour pour moteur à combustion interne selon l'une des revendications 5 ou 6, **caractérisé en ce qu'**au moins une broche de centrage (26) est formée sur la paroi de limite (12) supérieure, ladite broche correspondant avec au moins une encoche dans la plaquette (20).

8. Clapet anti-retour pour moteur à combustion interne selon l'une des revendications 6 ou 7, **caractérisé en ce que** l'élément de fixation (24) est réalisé sous forme d'une vis ou d'une cheville.

9. Clapet anti-retour pour moteur à combustion interne selon l'une des revendications 5 à 8, **caractérisé en ce que** les éléments de butée (30) s'étendent à partir de la surface de base (8) du boitier (6).

10. Clapet anti-retour pour moteur à combustion interne selon l'une des revendications 5 à 9, **caractérisé en ce que** ledit boitier (6) est sensiblement en forme d'un tronc de pyramide avec sections transversales d'écoulement (2) formées dans les quatre parois latérales (4) du tronc de pyramide.

11. Clapet anti-retour pour moteur à combustion interne selon l'une des revendications 5 à 9, **caractérisé en ce que** ledit boitier (6) a une surface de base (8) circulaire, à partir de laquelle des parois latérales (4) s'étendent vers la paroi de limite (12) disposée en parallèle avec la surface de base (8), les parois latérales étant disposées l'une par rapport à l'autre en forme d'un polygone à longueur de coté égale, vu en section transversale.

12. Procédé de fabrication d'un clapet anti-retour pour moteur à combustion interne selon l'une quelconque des revendications précédentes, **caractérisé en ce que**
le boitier (6) est coulé dans un moule à outil, lesdits éléments de butée (30) et les surfaces de siège de clapet (14) sont formés dans un demi-moule commun dudit outil,
les éléments de ressort à lame (18) sont estampés d'une plaquette (20) de façon liés entre eux et sont après recourbés correspondant aux surfaces de siège de clapet (14),
et, dans une étape finale, la plaquette (20) est fixée sur une paroi de limite (12) supérieure du boitier (6) par un élément de fixation (24).
